# FASCICULE DE BREVET EUROPEEN

(11) **EP 0 755 827 B1**
(45) Date de publication et mention de la délivrance du brevet: **26.04.2000**
(21) Numéro de dépôt: 96401682.8
(22) Date de dépôt: 26.07.1996
(51) Int. Cl.: B60R 11/02, B60R 7/05, G08G 1/0969

(54) **Dispositif de traitement et d'affichage d'informations de circulation routières ou urbaines embarqué dans un véhicule**
Anzeige- und Verarbeitungseinrichtung für Strassen- und Stadtverkehrsinformationen in einem Fahrzeug
Road and city traffic information processing and displaying device installed in a vehicle

(30) Priorité: 27.07.1995 FR 9509162
(43) Date de publication de la demande: 29.01.1997
(73) Titulaire: EUROPE SERVICES INTERACTIFS, 67552 Vendenheim (FR)
(72) Inventeur: Robert, Bruno, 75003 Paris (FR)
(74) Mandataire: Dupuis-Latour, Dominique

(56) Documents cités:
- WO-A-86/01288
- DE-A- 3 316 818
- DE-A- 3 341 679

## Description

L'invention concerne le traitement et l'affichage d'informations de circulation routière ou urbaine par un dispositif embarqué dans un véhicule.

On connaît divers systèmes de diffusion de données pour l'information et le guidage des automobilistes, qui utilisent généralement le système RDS (*Radio Data System*) permettant la diffusion de données numériques de radiomessagerie par voie hertzienne en modulation de fréquence.

Les spécifications du système RDS prévoient notamment la possibilité, outre la diffusion d'un certain nombre d'informations standard, de transmettre des messages de longueur et de format quelconque susceptibles d'être décodés et présentés à l'utilisateur. La réception de messages RDS d'information routière est par exemple décrite dans les EP-A-0 290 679, EP-A-0 263 332, EP-A-0 300 205 ou EP-A-0 384 794.

L'un des freins au développement de ces techniques réside dans la difficulté de présenter les données de façon simple mais complète au conducteur.

Les dispositifs d'affichage utilisés jusqu'à présent, comme indiqué dans le document DE-A-3 316 818 conformément à la première partie de la revendication 1, sont en effet de deux sortes, selon qu'ils sont prévus à la conception du véhicule ("première monte") ou installés après coup ("deuxième monte").

Dans le premier cas, on prévoit généralement un écran d'affichage tel qu'un afficheur à cristaux liquides intégré à la planche de bord du véhicule,et placé au fond d'une cavité suffisamment profonde pour éviter toute réflexion parasite et procurer un contraste suffisant pour assurer une lecture aisée malgré l'environnement souvent très lumineux.

Dans le second cas, lorsque l'on doit équiper un véhicule qui n'est pas conçu à l'origine pour cela, on prévoit généralement un afficheur de type écran de télévision miniature monté sur rotule en un endroit disponible du véhicule, généralement près de la console centrale, sous l'emplacement réservé à l'autoradio ; néanmoins, ces écrans sont souvent difficilement lisibles en raison de l'environnement très lumineux et des réflexions parasites fréquentes, comme mentionné plus haut.

De plus, les dispositifs existants présentent généralement une ergonomie assez médiocre, nécessitant diverses manipulation pour la commande de l'affichage, ce qui va à l'encontre d'un besoin de consultation rapide, par exemple lorsque le conducteur, arrêté à un feu rouge, doit savoir très rapidement quel itinéraire il doit emprunter pour éviter des secteurs encombrés ; compte tenu du temps très limité et du fait que, en pratique, l'utilisateur moyen répugne à utiliser des systèmes électroniques trop complexes, les dispositifs actuels s'avèrent en général assez peu satisfaisants sur ce plan de l'ergonomie.

Un dernier frein réside dans le coût élevé des dispositifs actuels qui, outre la nécessité de disposer d'une autoradio équipée d'un décodeur RDS approprié, impliquent des câblages supplémentaires pour relier autoradio, circuit décodeur et dispositif d'affichage.

L'un des buts de la présente invention est de remédier à ces divers inconvénients en proposant un dispositif de traitement et d'affichage d'informations du type précité, qui présente les avantages suivants :
- rapidité et simplicité d'utilisation, de manière à le rendre accessible à tous les utilisateurs potentiels et dans toutes les conditions de conduite,
- surface utile importante, de manière à augmenter à la fois la lisibilité de l'affichage et le nombre d'informations présentées sur un même affichage,
- excellente visibilité quelles que soient les conditions d'environnement lumineux, la position et la taille du conducteur, sans nécessiter de réglages complexes ni de moyens mécaniques supplémentaires à cet effet,
- possibilité d'adaptation à tout type de véhicule, que ce soit en "première monte" sans modification aucune de la planche de bord, ou en "deuxième monte" sans adjonction d'accessoires supplémentaires (donc sans encombrer l'espace de l'habitacle et sans accessoire apparent qui pourrait susciter des actes de vandalisme),
- possibilité de fonctionnement autonome, sans qu'il soit nécessaire de prévoir un câblage spécifique pour le raccordement à l'alimentation par le circuit de bord du véhicule et/ou à l'antenne du véhicule,
- coût minime, permettant une fabrication en grande série, indépendante du type de véhicule auquel le dispositif est destiné, de manière à permettre sa large diffusion dans le public,
- caractère interactif, pour permettre à l'utilisateur non seulement de visualiser des informations, mais également d'introduire aisément des données (par exemple un point de départ et un point d'arrivée) en vue de recueillir des informations spécifiques correspondantes (par exemple proposition d'itinéraire et temps de parcours estimé).

Le dispositif de traitement et d'affichage d'informations de l'invention comporte à cette fin les éléments énoncés dans la revendication 1 ; les sous-revendications en précisent des mises en oeuvre avantageuses.

D'autres caractéristiques et avantages de l'invention apparaîtront à la lecture de la description ci-dessous d'un exemple de mise en oeuvre de l'invention, en référence aux dessins annexés.

La figure 1 montre schématiquement un habitacle de véhicule dans lequel est disposé le système d'affichage de l'invention.

Les figures 2, 3 et 4 montrent différentes possibilités de réalisation du dispositif de l'invention, avec des degrés croissants d'intégration des composants.

La figure 5 illustre la possibilité d'utiliser le dispositif de l'invention indépendamment du véhicule, après l'avoir dissocié de son emplacement dans celui-ci.

La figure 6 montre la disposition des composants sur le circuit imprimé principal du dispositif de l'invention.

La figure 7 est une coupe agrandie partielle du dispositif de l'invention montrant la structure interne de celui-ci.

La figure 8 illustre un premier mode de réalisation des moyens afficheurs.

La figure 9 illustre un second mode de réalisation des moyens afficheurs.

La figure 10 illustre un mode de réalisation du dispositif sous forme d'un élément rapporté adaptable à un pare-soleil préexistant, ainsi que la possibilité d'utiliser le dispositif en combinaison avec une carte à microcircuit.

La figure 11 est une vue en plan d'un contact monté sur le circuit imprimé du dispositif de l'invention, dans une version interactive tactile de ce dernier.

Les figures 12 et 13 sont des vues en élévation du contact de la figure 11, respectivement selon XII-XII et XIII-XIII de cette figure 11.

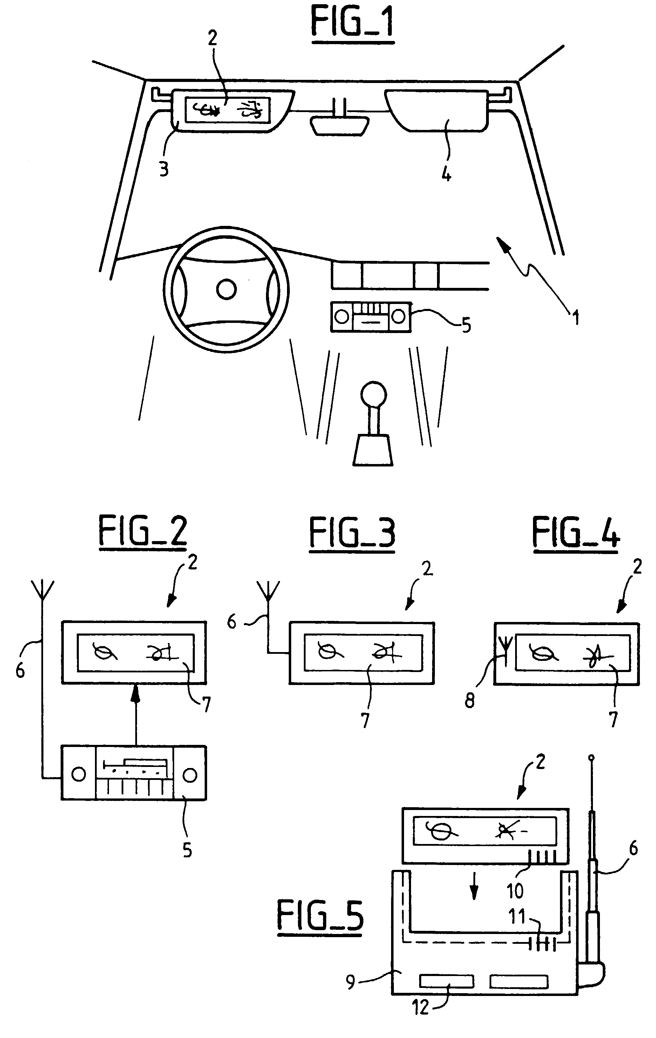

Sur la figure 1, on a présenté de façon générale l'habitacle 1 d'un véhicule, avec le dispositif de l'invention, référencé 2, incorporé ou ajouté à un pare-soleil 3 de ce véhicule.

Le dispositif peut être indifféremment intégré au pare-soleil, en formant avec celui-ci un ensemble monobloc, ou surajouté à ce pare-soleil, par exemple au moyen d'une pince, d'un clip, etc., ce qui permet son installation sur un pare-soleil déjà existant, ce qui ménage en outre une possibilité de séparation et d'utilisation indépendamment du véhicule, comme on l'expliquera plus bas.

Sur la figure 1, on a illustré le dispositif placé sur le pare-soleil 3 côté conducteur, mais il est également possible de le placer sur le pare-soleil 4 situé côté passager, en fonction des contraintes techniques, réglementaires ou pratiques.

Les avantages de cette configuration apparaissent de façon immédiate.

En premier lieu, l'afficheur 2 du dispositif de l'invention est situé dans une direction en azimut très proche de la direction de vision par l'utilisateur, ce qui évite à ce dernier de détourner le regard de façon importante, comme cela était jusqu'à présent le cas avec les afficheurs de guidage placés par exemple sur la console centrale, au voisinage de l'autoradio 5. L'invention s'apparente ainsi aux viseurs de type "tête haute", pour lesquels on cherche à minimiser les déplacements des yeux et de la tête de l'utilisateur.

Le second avantage est une possibilité très aisée de réglage de l'orientation en fonction de la position du siège et de la taille de l'utilisateur, ce dernier ayant simplement à ajuster l'orientation du pare-soleil par un geste instinctif, de la même façon qu'il ajuste la position d'un miroir intégré au pare-soleil.

Un autre avantage est de procurer une surface utile très importante, pratiquement la totalité de la surface du pare-soleil, très supérieure à ce qui était permis avec les afficheurs des dispositifs existants, cantonnés à une étendue relativement limitée en raison des contraintes d'installation.

Un autre avantage, particulièrement significatif, est le contraste important procuré par le pare-soleil, compte tenu de la fonction première d'occultation de ce dernier, le pare-soleil étant en outre situé près de la région du pavillon, qui est une des zones les plus sombres de l'habitacle.

Enfin, lorsque le pare-soleil est rabattu contre le pavillon, rien ne permet de soupçonner la présence du dispositif d'affichage, ce qui rend l'ensemble discret et à l'abri d'éventuels actes de vandalisme.

On a illustré figures 2 à 4 diverses manières de mettre en oeuvre l'invention, avec un degré croissant d'intégration des composants.

Dans la configuration de la figure 2, le dispositif 2 selon l'invention, c'est-à-dire l'élément placé sur le pare-soleil, ne comporte essentiellement que l'afficheur 7 avec ses circuits de pilotage. La réception des signaux et leur décodage est assurée par une autoradio RDS 5 alimentée par l'antenne 6 du véhicule ; l'autoradio 5 est un récepteur équipé d'un décodeur RDS classique, propre à extraire les données "à utilisation externe" du signal numérique RDS et à délivrer ces derniers sur une sortie appropriée sur laquelle est branché le dispositif 2 selon l'invention.

Dans la configuration de la figure 3, le dispositif 2 intègre ses propres moyens de réception radio et de décodage RDS, et le seul élément extérieur auquel il est relié est l'antenne 6 du véhicule. Le dispositif peut donc être utilisé indépendamment de la radio de bord (par exemple en réglant celle-ci sur une autre station que celle diffusant les données RDS nécessaires), et tout en profitant de la réception par l'antenne du véhicule.

Dans la configuration de la figure 4, le dispositif 2 de l'invention intègre la totalité des éléments nécessaires, c'est-à-dire non seulement les circuits de réception radio et de décodage RDS, mais comporte également une antenne intégrée 8, par exemple sous forme d'une boucle intégrée (on en décrira un exemple plus bas). Le dispositif, qui est ainsi totalement autonome, peut être donc utilisé même dans des voitures ne comportant pas de radio de bord et, en outre et surtout, il ne nécessite aucun câblage et peut donc être immédiatement mis en oeuvre sans aucune adaptation.

Dans ces diverses configurations illustrées figures 2 à 4, le dispositif de l'invention peut être alimenté par le circuit de bord du véhicule, auquel cas il est nécessaire de prévoir un fil d'alimentation, soit être autonome en ce qui concerne son alimentation électrique.

Dans ce dernier cas, on peut prévoir une alimentation par des piles mais, de façon très avantageuse, on peut également prévoir une alimentation par un panneau de cellules photovoltaïques associée à des moyens tampons de stockage d'énergie, par exemple une batterie rechargeable pour permettre une alimentation en toutes circonstances, notamment la nuit ou dans des passages sombres. Le panneau de cellules photovoltaïques est avantageusement placé de manière à se trouver au dos du pare-soleil, soit dans le même boîtier que le dispositif, lorsque celui-ci forme un ensemble monobloc avec le pare-soleil, soit sur un panneau distinct pouvant être fixé sur la face opposée du pare-soleil, dans le cas d'un dispositif surajouté à ce dernier.

On comprendra que, du fait de la position du pare-soleil lorsque celui-ci est déployé, le panneau de cellules photovoltaïques se trouve dans une position optimale en ce qui concerne l'illumination lorsque, précisément, le dispositif de l'invention est en service, ce qui constitue un avantage supplémentaire de la configuration particulière de ce dernier à l'endroit du pare-soleil.

Sur la figure 5, on a illustré le cas où le dispositif 2 selon l'invention est dissociable du pare-soleil et peut être utilisé de façon distincte de celui-ci, par exemple en le plaçant sur un support de table 9, auquel il est éventuellement relié par des moyens connecteurs 10,11 pour permettre l'alimentation par une source d'énergie 12 et la liaison éventuelle à une antenne 6 ; l'utilisateur a ainsi la possibilité d'emporter le dispositif de l'invention avec lui (ce qui ne présente pas de difficulté particulière compte tenu de sa forme très plate) et utiliser celui-ci par exemple chez lui ou au bureau afin d'être informé de l'état de la circulation avant de partir, et donc de choisir son itinéraire en conséquence. Le dispositif peut également, comme on l'expliquera plus bas, être conçu pour afficher non seulement des données de trafic, mais également d'autres données présentant un intérêt, comme des données de situation météorologique, sur l'état des parcs de stationnement, etc.

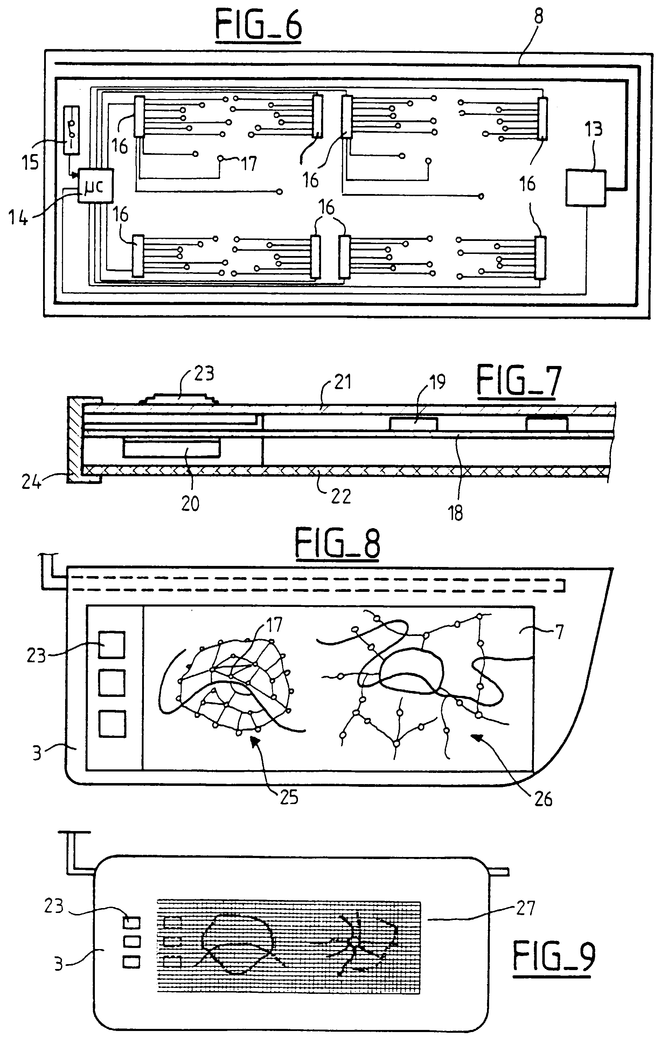

Sur la figure 6, on a illustré plus en détail la structure interne du dispositif de l'invention dans le cas de la configuration autonome (celle représentée schématiquement figure 4).

Plus précisément, le dispositif comporte une carte de circuit portant une antenne imprimée 8, par exemple sous la forme d'une boucle à une ou plusieurs spires, accordées ou non. Le signal recueilli est appliqué à un circuit 13 comprenant les étages radio habituels, ainsi qu'un étage décodeur RDS susceptible d'extraire les informations codées à traiter, de manière en elle-même connue.

Les signaux numériques délivrés sont appliqués à un microcontrôleur 14 gérant l'afficheur du dispositif de l'invention. Avantageusement, ce microcontrôleur 14 coopère avec un interrupteur 15 du type interrupteur à bille permettant la mise hors service de l'affichage lorsque le pare-soleil est en position rabattue, de manière à économiser l'alimentation, notamment dans le cas d'une alimentation tampon ou d'une alimentation par pile ; toutefois, le circuit 13 radio et de décodage RDS reste en service en permanence, de manière à assurer une réception en continu et un rafraîchissement des informations à afficher (dans le cas contraire, il serait nécessaire d'attendre l'acquisition de toutes les données au moment de la mise en service du dispositif, cette durée pouvant être prohibitive, typiquement de l'ordre de 10 secondes pour un affichage sur 256 segments ou 100 secondes pour l'affichage de données cartographiques sur un écran matriciel du type afficheur à cristaux liquides).

Le microcontrôleur commande en fonction des signaux reçus une série de démultiplexeurs 16 commandant chacun un élément d'affichage individuel 17, par exemple une diode électroluminescente. Chacun de ces éléments 17 correspond à un secteur, segment ou lieu particulier d'un plan tel que celui illustré figure 8 et placé sur une feuille semi-transparente recouvrant le circuit imprimé. On peut par exemple prévoir, pour une ville comme Paris, ou pour la banlieue de Paris, un affichage sur 256 éléments, chacun de ces éléments pouvant prendre cinq états différents (éteint, clignotant lent, clignotant rapide, etc.) symbolisant l'état plus ou moins chargé du trafic à l'endroit correspondant. En variante, on peut allumer des diodes de couleurs différentes (vert = fluide ; rouge = encombré) en fonction de l'état du trafic, par un circuit simple de commutation entre les deux diodes.

Sur la figure 7, on a représenté en coupe la structure du dispositif, avec le circuit imprimé 18 en position centrale et les éléments luminescents 19, qui sont par exemple des diodes électroluminescentes de type CMS directement rapportées sur l'une des faces du circuit 18. Sur l'autre face sont rapportés des composants 20 tels que ceux constituant le circuit 13 radio et décodeur et le microcontrôleur 14 ; on notera incidemment que le circuit radio et le microcontrôleur sont avantageusement disposés dans des régions opposées du circuit (l'un à droite et l'autre à gauche), pour éviter toute interférence gênante. La face avant 21, c'est-à-dire celle visible par l'utilisateur, est recouverte d'une plaque de matériau semi-transparent, tel qu'un polycarbonate, sur lequel sont gravés ou imprimés des motifs tels que ceux illustrés figure 8 schématisant, éventuellement en plusieurs couleurs, les plans des zones dont on veut afficher l'état du trafic.

La face opposée 22 est constituée avantageusement, comme indiqué plus haut, d'un panneau de cellules photovoltaïques permettant l'alimentation du dispositif.

Il est éventuellement prévu (bien que cela ne soit pas indispensable dans une version simplifiée) un ou plusieurs boutons-poussoirs 23 permettant l'affichage sélectif de différentes informations, par exemple des informations de trafic uniquement, des informations sur l'état d'occupation des parcs de stationnement, des informations météo, des informations sur l'emplacement des radars de contrôle, etc., le choix entre ces différents types d'informations étant opéré par appui sur un bouton-poussoir correspondant.

Cette structure est enfermée dans un cadre périphérique 24 de manière à constituer un ensemble monobloc susceptible de faire fonction de pare-soleil, ou d'être adjoint à un pare-soleil, ou emboîté sur celui-ci.

Sur la figure 8, on a représenté l'aspect extérieur du dispositif ainsi constitué, dans ce premier mode de réalisation où les éléments afficheurs sont constitués par des diodes électroluminescentes disposées en certains points d'un plan gravé ou imprimé sur la face avant du dispositif, par exemple un plan de Paris 25 et de sa banlieue 26, chacun de ces plans pouvant comprendre, comme on l'a indiqué, jusqu'à 256 éléments d'affichage commandables séparément. Éventuellement, la face avant peut être prévue interchangeable, pour permettre de disposer de cartes personnalisées, avec des présentations différentes, etc.

On peut également prévoir d'afficher, pour les grands axes de circulation, un ensemble de deux flèches opposées commandables séparément et symbolisant les deux sens de circulation sur l'axe en question.

Dans une seconde forme de réalisation particulière, on peut prévoir un rétroéclairage du plan, ce rétroéclairage étant variable en fonction du nombre de diodes allumées. À cet effet, N lampes classiques (lampes à incandescence de tableau de bord) sont montées en série avec le groupe de diodes ; elles assurent d'une part l'abaissement de la tension de bord de 14,8 V du véhicule aux 3 V nécessaires à l'alimentation (ceci donc sans nécessiter d'alimentation à découpage) et d'autre part elles limitent la consommation et la luminescence du plan à N x 1,2 W,

La figure 9 est homologue de la figure 8, pour une variante plus élaborée dans laquelle les moyens d'affichage comportent une matrice de points 27 du type affichage à cristaux liquides entièrement commandés par des informations de type alphanumérique et graphique délivrées par le circuit décodeur. Ce second mode de réalisation présente bien entendu un caractère universel et n'est pas limité à une ville ou à un secteur particulier ; il nécessite toutefois des composants supplémentaires ou plus complexes (afficheur, circuit de pilotage, ressources mémoire, etc.) mais en contrepartie il peut permettre l'adaptation immédiate de l'affichage par simple réglage sur la station FM de la zone où se trouve le conducteur (Paris, banlieue, ville de province, etc.).

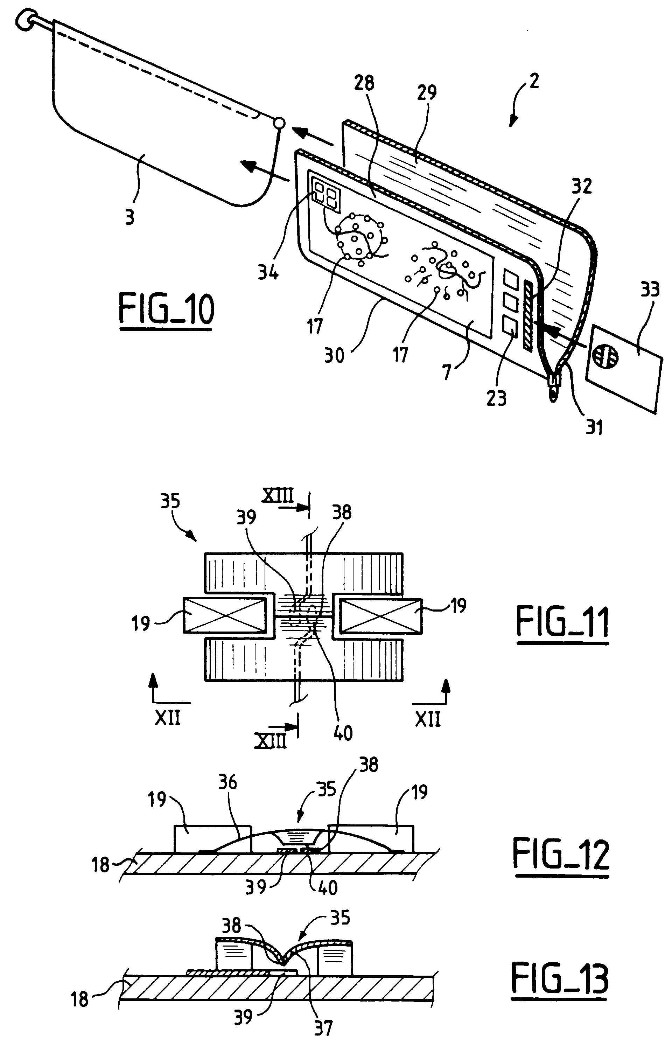

Sur la figure 10, on a représenté une forme de réalisation du dispositif de l'invention permettant son montage aisé sur un pare-soleil préexistant.

Le dispositif 2 de l'invention est à cet effet réalisé sur un circuit souple comportant deux volets 28, 29 rabattus de part et d'autre d'une pliure centrale 30. Sur deux des côtés est prévu une fermeture à glissière 31 permettant, en position fermée, de constituer un manchon enfilé sur le pare-soleil 3.

Le volet 28 situé côté conducteur porte l'afficheur 7 avec les divers éléments d'affichage individuels 17, comme on l'a expliqué plus haut en référence à la figure 8. Ce circuit peut également comporter une fente 32 destinée à recevoir une carte à microcircuit 33, ainsi qu'un afficheur numérique 34 permettant, comme on l'expliquera plus bas, d'afficher par exemple des temps de parcours estimés.

Le second volet 29, quant à lui, porte les circuits de réception radio, le décodeur RDS et le microcontrôleur ainsi que, le cas échéant, le panneau de cellules photovoltaïques d'alimentation du dispositif.

Avec une telle structure, dans une version "multivilles" du produit, on peut prévoir une face avant amovible, propre à chaque ville, raccordable à la carte électronique distante par une nappe de fils, la connexion étant réalisée par simple insertion dans des zones linéaires de contact.

Le dispositif de l'invention, que ce soit dans le mode de réalisation illustré figure 10 ou dans ceux illustrés dans les figures précédentes, est avantageusement un dispositif interactif comportant une fonction tactile grâce à un certain nombre de touches situées sur l'afficheur 7 (touches indépendantes des éventuelles touches de fonction 23 évoquées plus haut), par exemple sur un certain nombre de points importants tels que les places ou les portes de Paris.

En pratique, chaque touche peut être avantageusement réalisée au moyen d'un contact rapporté sur le circuit imprimé, en forme de lame métallique élastique conformée comme illustré figures 11,12 et 13.

Cette lame, référencée 35, présente en plan (figure 11) une forme générale de "H", ce qui permet de le placer au voisinage d'éléments électroluminescents déjà présents sur le circuit, par exemple les deux diodes électroluminescentes 19 affichant les deux sens de circulation possibles sur un segment. En vue de côté (figure 12) la lame 35 présente une forme arquée 36 de manière à procurer une certaine élasticité, avec une zone de contact (au sommet de la partie arquée 36) permettant un appui aisé sans être gêné par l'épaisseur des diodes 19. En vue de face (figure 13) la lame présente un profil en "aile de mouette" 37 de manière à limiter fortement la course, le point de rebroussement 38 de l'aile de mouette se trouvant à très faible distance des pistes imprimées 39, 40 du circuit imprimé 18.

On peut ainsi former sur le circuit imprimé 18 une pluralité de contacts disposés pratiquement aux mêmes emplacements que des éléments d'affichage individuels 17, sans empiéter sur les éléments électroluminescents qui doivent restés apparents, et ce avec une large surface d'appui et une faible course de contact.

L'interactivité est destinée à l'utilisateur qui souhaite introduire dans le dispositif une donnée de point de départ et de point d'arrivée afin que celui-ci lui indique le meilleur itinéraire compte tenu des informations courantes d'état du trafic, avec le cas échéant une évaluation du temps de parcours prévisible.

Cette interactivité est réalisée de la manière suivante.

L'utilisateur appui sur une première touche, correspondant au point de départ ; le dispositif enregistre le lieu correspondant et met par exemple en clignotement le ou les éléments d'affichage de ce lieu, et se met en attente de l'appui sur une deuxième touche.

L'utilisateur appuie alors sur la touche du lieu de destination qu'il a choisi, lieu qui est enregistré par le dispositif.

Ce dernier va alors retrouver une série d'itinéraires possibles entre ces deux lieux. Par exemple, le dispositif dispose dans une table en EPROM d'une pluralité d'itinéraires mémorisés pour chaque couple de lieux départ/arrivée, ces itinéraires étant par exemple enregistrés sous forme d'une liste de segments d'itinéraires traversés.

Le dispositif calcule alors pour chacun des itinéraires possibles le temps de parcours total en fonction d'informations correspondantes transmises par voie RDS pour chaque segment ; ces informations sont mises à jour en permanence (typiquement plusieurs fois par minute) et donc représentatives de l'état réel du trafic à l'instant du traitement de la demande.

Le dispositif sélectionne alors l'itinéraire correspondant au temps de parcours le plus faible et allume les éléments d'affichage individuels correspondant à cet itinéraire préférentiel. Avantageusement, un afficheur numérique 34 indique le temps total estimé du parcours, exprimé en minutes.

Une autre caractéristique technique qu'il est avantageux d'utiliser dans le cadre de l'invention est la combinaison du dispositif avec une carte à microcircuit 33 permettant par exemple de conditionner la réception et l'affichage des informations à l'abonnement à un service, la carte étant alors délivrée aux seuls abonnés, et avec une validité limitée dans le temps. Cette carte 33 comporte alors une partie du logiciel de décodage, ou bien des clés de décryptage dans le cas d'informations cryptées, ou encore est conçue pour mettre en oeuvre toute autre technique connue d'accès conditionnel. Elle peut notamment fournir au microprocesseur les paramètres de réception de la trame RDS : fréquence FM utilisée (par exemple 104,7 MHz), groupe RDS utilisé (10 ou 11), rubrique à afficher (par exemple TRF) ainsi que la clé de décodage valable pour le mois considéré, celle-ci activant le "générateur d'octets chiffrants" de décodage.

On peut également utiliser la carte à microcircuit pour implanter dans le dispositif des fonctions nouvelles non incorporées à l'origine, par exemple pour décoder des informations sur la situation des parkings ou des aires de stationnement. Ces fonctions nouvelles sont activées par appui sur les touches de fonction 23, après insertion de la carte.

## Revendications

1. Un dispositif de traitement et d'affichage d'informations de circulation routières ou urbaines embarqué dans un véhicule, ce dispositif coopérant avec des moyens (13) de réception et de décodage, et comprenant des moyens afficheurs (7) ayant
un boîtier plat intégrant les moyens afficheurs et incorporé ou ajouté à un pare-soleil (3, 4) du véhicule, ce pare-soleil étant essentiellement plan, monté avantageusement côté conducteur et situé, en position opérante, dans le champ de vision supérieur de l'utilisateur dans une direction en azimut voisine de la direction de vision de la route par l'utilisateur, ce dispositif de traitement et d'affichage d'informations de circulation routières ou urbaines est caractérisé en ce que les moyens (13) permettent la réception et le décodage de signaux numériques de radiomessagerie codés diffusés par voie hertzienne, notamment par modulation d'une sous-porteuse ajoutée à un signal d'émission de radiodiffusion,
et en ce que les moyens afficheurs (7) comprennent, associés à un plan (25, 26) d'une région urbaine ou routière, une pluralité d'éléments d'affichage individuels (17) commandables séparément et représentatifs du lieu géographique correspondant sur le plan à une information de circulation correspondante à afficher.

2. Le dispositif de la revendication 1 dans lequel, le pare-soleil étant rabattable, le dispositif comporte des moyens (15) de mise hors service ou en service d'une partie au moins du dispositif, notamment des moyens afficheurs, et commandés en fonction de la position rabattue ou déployée, respectivement, du pare-soleil.

3. Le dispositif de la revendication 1, dans lequel il est prévu, sur la face du pare-soleil opposée à la face portant les moyens afficheurs, un panneau à cellules photovoltaïques (22) pour l'alimentation du dispositif, le dispositif comportant également des moyens tampon de stockage d'énergie.

4. Le dispositif de la revendication 1, dans lequel le boîtier intègre les moyens (13) de réception et de décodage.

5. Le dispositif de la revendication 4, dans lequel le boîtier intègre également une antenne (8).

6. Le dispositif de la revendication 1, dans lequel il est en outre prévu des moyens sélecteurs (23) pour commander de façon sélective et exclusive certains groupes d'éléments d'affichage, les différents groupes correspondant notamment à des types d'informations de nature différente.

7. Le dispositif de la revendication 1, dans lequel le dispositif est un dispositif partiellement ou totalement séparable du pare-soleil de manière à permettre son utilisation indépendante.

8. Le dispositif de la revendication 1, comportant en outre un lecteur (32) de carte à microcircuit, les circuits de décodage des signaux numériques de radiomessagerie pouvant coopérer avec le microcircuit d'une carte (33) insérée dans le lecteur de manière à conditionner le décodage de ces signaux à l'insertion d'une carte appropriée et valide.

9. Le dispositif de la revendication 1, dans lequel il est prévu des touches (35), commandables par l'utilisateur, à l'endroit d'au moins certains des éléments d'affichage individuels (17), de manière à introduire dans le dispositif une information de lieu géographique correspondant à la situation sur le plan de la touche correspondante.

10. Le dispositif de la revendication 9, comportant en outre des moyens de détermination d'itinéraires, activés par l'appui consécutif sur une touche de lieu d'origine et une touche de lieu de destination, des moyens de sélection, parmi les itinéraires ainsi déterminés, de celui assurant le moindre temps de trajet compte tenu des informations actuelles de circulation sur les différents tronçons de ces itinéraires, des moyens pour commander les éléments d'affichage correspondant à l'itinéraire ainsi sélectionné, et des moyens (34) d'affichage du temps de trajet calculé correspondant.

## Patentansprüche

1. Vorrichtung zum Behandeln und Anzeigen von Straßen- oder Stadtverkehrsinformationen an Bord eines Fahrzeugs, wobei die Vorrichtung mit Empfangs- und Dekodier-Einrichtungen (13) zusammenwirkt und Anzeigeeinrichtungen (7) mit einem flachen Gehäuse aufweist, das die Anzeigeeinrichtungen integriert und in eine Sonnenblende (3, 4) des Fahrzeugs inkorporiert oder dieser angefügt ist, wobei diese Sonnenblende im wesentlichen flach ist, günstig neben dem Fahrer montiert ist und, in Betriebsposition, im oberen Sichtfeld des Benutzers liegt, in einer azimuthalen Richtung nahe der Straßenblickrichtung des Benutzers, wobei die Vorrichtung zum Behandeln und Anzeigen von Straßen- oder Stadtverkehrsinformationen **dadurch gekennzeichnet ist, daß** die Einrichtungen (13) den Empfang und die Dekodierung kodierter numerischer Signale von Verkehrsfunkunternehmen, die durch einen Funkkanal verbreitet werden, ermöglichen, insbesondere durch Modulation eines Unterträgers, welcher einem Rundfunkemissionssignal hinzugefügt ist,
und daß die Anzeigeeinrichtungen (7), zugeordnet einer Karte (25, 26) cines Stadt- oder Straßenbereiches, eine Mehrzahl individueller Anzeigeelemente (17) aufweisen, die getrennt betätigbar und für den geographischen Ort repräsentativ sind, der auf der Karte einer anzuzeigenden entsprechenden Verkehrsinformation entspricht.

2. Vorrichtung nach Anspruch 1, bei der die Vorrichtung - indem die Sonnenblende zurückklappbar ist - Mittel (15) zum Abschalten oder Einschalten mindestens eines Teils der Vorrichtung, insbesondere der Anzeigeeinrichtungen, umfaßt und die in Abhängigkeit von der zurückgeklappten bzw. ausgeklappten Position der Sonnenblende betätigt werden.

3. Vorrichtung nach Anspruch 1, bei der auf derjenigen Seite der Sonnenblende, die der Seite, welche die Anzeigeeinrichtungen trägt, gegenüberliegt, eine Tafel von photovoltaischen Zellen (22) zur Speisung der Vorrichtung vorgesehen ist, wobei die Vorrichtung auch Energiepuffer-Speichereinrichtungen aufweist.

4. Vorrichtung nach Anspruch 1, bei der das Gehäuse die Empfangs- und Dekodier-Einrichtungen (13) enthält.

5. Vorrichtung nach Anspruch 4, bei der das Gehäuse auch eine Antenne (8) enthält.

6. Vorrichtung nach Anspruch 1, bei der unter anderem Wählmittel (23) vorgesehen sind, um selektiv und exklusiv bestimmte Gruppen von Anzeigeelementen zu betätigen, wobei die verschiedenen Gruppen insbesondere Informationstypen unterschiedlicher Natur entsprechen.

7. Vorrichtung nach Anspruch 1, bei der die Vorrichtung eine Vorrichtung solcher Art ist, daß sie teilweise oder ganz von der Sonnenblende ablösbar ist, derart, daß ihre ungebundene Benutzung möglich ist.

8. Vorrichtung nach Anspruch 1, die unter anderem ein Lesegerät (32) für Mikroschaltungskarten aufweist, wobei die Schaltungen für eine Dekodierung numerischer Signale von Verkehrsfunkunternehmen mit der Mikroschaltung einer in das Lesegerät eingeführten Karte (33) so zusammenwirken können, daß die Dekodierung der Signale vom Einführen einer zweckdienlichen und gültigen Karte bedingt ist.

9. Vorrichtung nach Anspruch 1, bei der Tasten (35) vorgesehen sind, die durch den Benutzer betätigbar sind, an der Stelle von zumindest bestimmten individuellen Anzeigeelementen (17), derart, daß in die Vorrichtung eine Information über den geographischen Ort eingegeben wird, die der Lage der entsprechenden Taste auf der Karte entspricht.

10. Vorrichtung nach Anspruch 9, die unter anderem aufweist: Einrichtungen zur Bestimmung von Entlastungswegen, die durch das aufeinanderfolgende Drücken der Taste für den Ursprungsort und einer Taste für den Bestimmungsort aktiviert werden; Einrichtungen für die Auswahl unter den so bestimmten Entlastungswegen desjenigen Weges, der die geringste Fahrzeit unter Berücksichtigung aktueller Verkehrsinformationen über die verschiedenen Abschnitte dieser Entlastungswege gewährleistet; Einrichtungen zum Betätigen der Anzeigeelemente gemäß dem so gewählten Entlastungsweg; und Einrichtungen (34) zum Anzeigen der entsprechenden berechneten Fahrzeit.

## Claims

1. An on-board device for processing and displaying road or street traffic information, the device co-operating with receiver and decoder means (13), the device also comprising display means (7) having a flat housing integrating the display means and incorporated in or added to a sun visor (3, 4) of the vehicle, the sun visor being essentially plane, the device being advantageously mounted on the driver's side and being situated in its operating position in the top of the user's field of view in an azimuth direction close to the direction in which the user looks at the road ahead, the device for processing and displaying road or street traffic information is characterized in that the means (13) enable the reception and decoding of encoded digital paging signals broadcast by radio, in particular by modulating a subcarrier added to a radio broadcast signal; and
in that in association with a road or city map (25, 26) the display means (7) comprise a plurality of separately controllable individual display elements (17) representative of geographical locations corresponding on the map to corresponding traffic information that is to be displayed.

2. The device of claim 1, in which the sun visor is capable of being folded-up, the device including means (15) enabling at least a portion thereof, in particular the display means, to be switched OFF and ON as a function of the sunvisor being respectively in the folded-up position or in the folded-down position.

3. The device of claim 1, in which the face of the sun visor opposite to its face carrying the display means is provided with a panel of photocells (22) for powering the device, the device also including buffer means for storing energy.

4. The device of claim 1, in which the housing has the receiver and decoder means (13) integrated therein.

5. The device of claim 4, in which the housing also has an antenna (8) integrated therein.

6. The device of claim 1, in which selector means (23) are also provided selectively and exclusively to control certain groups of display elements, the various groups corresponding in particular to different types of information.

7. The device of claim 1, in which the device is partly or completely separable from the sun visor so as to enable it to be used independently.

8. The device of claim 1, further including a smart card reader (32), the circuits for decoding the digital radio paging signals being capable of co-operating with the microcircuit of a card (33) inserted in the reader so as to make decoding of the signals dependent on inserting a card that is appropriate and valid.

9. The device of claim 1, in which user-operable keys (35) are provided at the locations of at least some of the individual display elements (17) so as to enable information to be input into the device concerning the geographical location corresponding to the position on the map of the corresponding key.

10. The device of claim 9, further including route-determining means activated by pressing consecutively on a starting location key and on a destination location key, means for selecting from the routes determined in this way that route which provides the shortest travel time given the current traffic information concerning the various portions of said routes, means for controlling the display elements corresponding to the route selected in this way, and means (34) for displaying the corresponding computed travel time.
